# EUROPEAN PATENT SPECIFICATION

(11) **EP 4 509 990 B1**
(45) Date of publication and mention of the grant of the patent: **30.09.2026**
(21) Application number: 23851345.1
(22) Date of filing: 05.06.2023
(51) Int. Cl.: G06F 11/30, H04L 67/289, H04L 67/50, H04L 67/56, H04L 9/40, G06F 11/34

(54) **DATA PROCESSING METHOD AND RELATED APPARATUS**
DATENVERARBEITUNGSVERFAHREN UND ZUGEHÖRIGE VORRICHTUNG
PROCÉDÉ DE TRAITEMENT DE DONNÉES ET APPAREIL ASSOCIÉ

(30) Priority: 12.08.2022 CN 202210968873
(43) Date of publication of application: 19.02.2025
(73) Proprietor: xFusion Digital Technologies Co., Ltd., Zhengzhou, Henan 450000 (CN)
(72) Inventor: LU, Feng, Zhengzhou, Henan 450000 (CN); YANG, Shuo, Zhengzhou, Henan 450000 (CN)
(74) Representative: MERH-IP Matias Erny Reichl Hoffmann Patentanwälte PartG mbB
(86) International application number: PCT/CN2023/098408
(87) International publication number: WO 2024/032117

(56) References cited:
- CN-A- 101 083 537
- CN-A- 111 444 290
- CN-A- 111 444 290
- CN-A- 113 504 928
- CN-A- 113 852 693
- US-A1- 2011 283 365
- US-A1- 2011 283 365
- US-A1- 2020 274 782

## Description

### TECHNICAL FIELD

This application relates to the field of computer technologies, and in particular, to a data processing method and a related apparatus.

### BACKGROUND

A remote monitoring service for a general server is of great value for daily operation and maintenance of small and medium-sized enterprise users. By using remote maintenance, a basic monitoring capability of the server can be handed over to a professional manufacturer to be completed, so that a user needs to focus only on a core service of the user. A remote monitoring service based on multiple dimensions such as a server hardware health status, performance evaluation, and fault prediction is a development direction of the computing field.

A provider of the remote monitoring service generally needs to deploy, in a network of the user, cluster management software used to collect data information of the user. Then, the data information is communicated and sent to a big data platform of the remote monitoring service by using an encrypted communication protocol such as hypertext transfer protocol secure (HTTPS), to perform data storage and analysis on the data information.

In a process of the remote monitoring service, the data information collected in the network of user and transmitted to the big data platform is a black box for the user, and the user cannot perceive which data is collected and transmitted to the big data platform of the remote monitoring service. As a result, the user cannot determine whether sensitive data or data related to information security is transmitted to the big data platform of the remote monitoring service. This affects information security.
Document US 2020/274782 A1 relates to systems and methods for alerting administrators of a monitored digital user experience that include performing inline monitoring of network access between one or more users each with an associated user device executing an agent application, the Internet, and one or more cloud applications and private applications. The systems and methods also include obtaining device, application, and network metrics related to the inline monitoring from a cloud system and a logging and analytics system. The systems and methods further include comparing the metrics to one or more alerts comprising alert rules. The systems and methods yet further include sending a notification to one or more administrators when the metrics include data that satisfies the alert rules of the one or more alerts.

### SUMMARY

Embodiments of this application provide a data processing method and a related apparatus, to improve an information security capability of user equipment. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

According to a first aspect, an embodiment of this application provides a data processing method.

A proxy service apparatus obtains first data of user equipment.

The proxy service apparatus saves the first data locally to obtain second data, where the second data is configured for review by a user.

The proxy service apparatus sends the second data when the proxy service apparatus determines that the second data meets a first forwarding rule.

In the embodiment of this application, the user may review the to-be-sent second data, and the proxy service apparatus needs to forward the second data based on an indication of the forwarding rule, thereby achieving dual control on the second data by the user and the proxy service apparatus, and improving an information security capability of the user equipment.

Based on the first aspect, in an optional implementation, after the proxy service apparatus saves the first data locally to obtain the second data, the method further includes:
The proxy service apparatus generates an operation log based on the second data, where the operation log is configured for the user to review the second data.

Based on the first aspect, in an optional implementation, the first forwarding rule includes:

The proxy service apparatus sends the second data in response to an instruction of the user, where the instruction is configured to indicate that the user agrees to forward the second data.

Based on the first aspect, in an optional implementation, prior to the proxy service apparatus sends the second data, the method further includes:
The proxy service apparatus obtains a second forwarding rule, where the second forwarding rule is an updated first forwarding rule; and
the proxy service apparatus sends the second data when the proxy service apparatus determines that the second data meets the second forwarding rule.

Based on the first aspect, in an optional implementation, the method further includes:

The proxy service apparatus obtains third data based on the second data, where the third data includes at least one of performance information of the user equipment, a log of the user equipment, alarm information of the user equipment, version information of an operating system running on the user equipment, a time of sending the second data, or a target object to which the second data is sent; and
the proxy service apparatus displays a first interface, where the first interface includes the third data.

Based on the first aspect, in an optional implementation, the proxy service apparatus is deployed on a virtual machine of the user equipment.

Based on the first aspect, in an optional implementation, the proxy service apparatus is deployed on a first device, and the first device and the user equipment are located in a same network.

According to a second aspect, an embodiment of this application provides a proxy service apparatus, including:
a processing unit, configured to obtain first data of user equipment,
where the processing unit is further configured to save the first data locally to obtain second data, where the second data is configured for review by a user; and
a sending unit, configured to send the second data when it is determined that the second data meets a first forwarding rule.

Based on the second aspect, in an optional implementation, the processing unit is further configured to:
generate an operation log based on the second data, where the operation log is configured for the user to review the second data.

Based on the second aspect, in an optional implementation, the first forwarding rule includes:

The sending unit sends the second data in response to an instruction of the user, where the instruction is configured to indicate that the user agrees to forward the second data.

Based on the second aspect, in an optional implementation, the processing unit is further configured to obtain a second forwarding rule, where the second forwarding rule is an updated first forwarding rule; and
the sending unit is further configured to send the second data when it is determined that the second data meets the second forwarding rule.

Based on the second aspect, in an optional implementation, the processing unit is further configured to:
obtain third data based on the second data, where the third data includes at least one piece of data in the second data; and
display a first interface, where the first interface includes the third data.

Based on the second aspect, in an optional implementation, the proxy service apparatus is deployed on a virtual machine of the user equipment.

Based on the second aspect, in an optional implementation, the proxy service apparatus is deployed on a first device, and the first device and the user equipment are located in a same network.

According to a third aspect, a computing device is provided, including a memory, a communication interface, and a processor coupled to the memory and the communication interface, where the memory is configured to store instructions, the processor is configured to execute the instructions, the communication interface is configured to communicate with another device under control of the processor, and when executing the instructions, the processor performs the method according to any one of the foregoing aspects.

According to a fourth aspect, a computer-readable storage medium is provided, where the computer-readable storage medium stores a computer program, and when the computer program is run on a processor, the method according to any one of the foregoing aspects is implemented.

According to a fifth aspect, a computer program product or a computer program is provided, where the computer program product or the computer program includes computer instructions, and when the computer instructions are run on a processor, the method according to any one of the foregoing aspects is implemented.

According to a sixth aspect, an embodiment of this application provides a chip system, where the chip system includes a processor, configured to implement functions in the foregoing aspects, for example, send or process data and/or information in the foregoing methods. In a possible design, the chip system further includes a memory. The memory is configured to save program instructions and data that are necessary for a server or a communication device. The chip system may be composed of a chip, or may include a chip and another discrete device.

It can be learned from the foregoing technical solutions that the embodiments of this application have the following advantages.

The proxy service apparatus obtains the first data of the user equipment; the proxy service apparatus saves the first data locally to obtain the second data, where the second data is configured for review by the user; and the proxy service apparatus sends the second data when the proxy service apparatus determines that the second data meets the first forwarding rule. In the embodiments of this application, the user may review the to-be-sent second data, and the proxy service apparatus needs to forward the second data based on an indication of the forwarding rule, thereby achieving dual control on the second data by the user and the proxy service apparatus, and improving an information security capability of the user equipment.

### BRIEF DESCRIPTION OF DRAWINGS

To describe the technical solutions in the embodiments of this application or a conventional technology more clearly, the following provides a brief introduction to the accompanying drawings required for describing the embodiments or the conventional technology. It is clear that the accompanying drawings in the following description show merely embodiments of this application, and a person of ordinary skill in the art may still derive other drawings from the provided accompanying drawings without creative efforts.
FIG. 1 is a schematic diagram of a framework of an existing remote monitoring service;
FIG. 2 is a schematic diagram of an application scenario of a data processing method according to an embodiment of this application;
FIG. 3 is a schematic flowchart of a data processing method according to an embodiment of this application;
FIG. 4 is a schematic diagram of a forwarding procedure based on enabling/disabling of a forwarding function according to an embodiment of this application;
FIG. 5 is a schematic flowchart of updating a forwarding function of a proxy service apparatus according to an embodiment of this application;
FIG. 6 is a schematic diagram of a structure of a proxy service apparatus according to an embodiment of this application; and
FIG. 7 is a schematic diagram of a structure of a computing device according to an embodiment of this application.

### DESCRIPTION OF EMBODIMENTS

Embodiments of this application provide a data processing method and a related apparatus, to improve an information security capability of user equipment.

The following describes the embodiments of this application with reference to the accompanying drawings in the embodiments of this application. Terms used in the DESCRIPTION OF EMBODIMENTS part of this application are merely used to explain specific embodiments of this application, and are not intended to limit this application. A person of ordinary skill in the art may learn that, with development of technologies and emergence of a new scenario, the technical solutions provided in the embodiments of this application are also applicable to a similar technical problem.

In the embodiments of this application, "at least one" means one or more, and "a plurality of" means two or more. The term "and/or" describes an association relationship for associated objects and represents that there can be three types of relationships. For example, A and/or B may represent the following cases: A exists alone, both A and B exist, and B exists alone. A and B each may be singular or plural. "At least one of the following items" or similar expressions thereof means any combination of these items, including any combination of a single item or a plurality of items. For example, at least one of a, b, or c may represent: a, b, c, a-b, a-c, b-c, or a-b-c, where a, b, and c may be singular or plural.

In the specification, claims, and accompanying drawings of this application, the terms "first", "second", "third", "fourth", and so on (if any) are intended to distinguish between similar objects but do not necessarily describe a specific order or sequence. It should be understood that the data used in such a way are interchangeable in proper circumstances, so that the embodiments of this application described herein can be implemented in an order other than the order illustrated or described herein. Moreover, the terms "include", "have", and any other variants thereof are intended to cover non-exclusive inclusion, for example, a process, method, system, product, or device that includes a series of steps or units is not necessarily limited to those steps or units that are clearly listed, but may include other steps or units that are not clearly listed or that are inherent to such a process, method, product, or device.

A remote monitoring service for a general server is of great value for daily operation and maintenance of small and medium-sized enterprise users. By using remote maintenance, a basic monitoring capability of the server can be handed over to a professional manufacturer to be completed, so that a user needs to focus only on a core service of the user. A remote monitoring service based on multiple dimensions such as a server hardware health status, performance evaluation, and fault prediction is a development direction of the computing field.

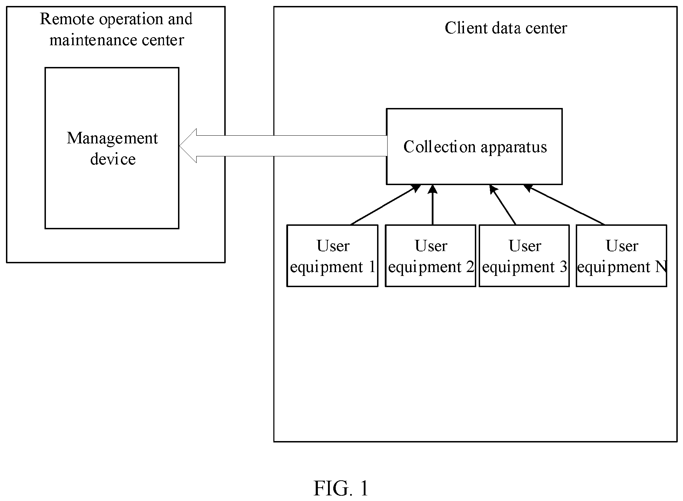

Referring to FIG. 1, FIG. 1 is a schematic diagram of a framework of an existing remote monitoring service. As shown in FIG. 1, a provider of a remote monitoring service generally needs to deploy, in a network of a user, a collection apparatus configured to collect data information of the user. Exemplarily, the collected data information may be information such as a log, performance, an alarm, or a version of user equipment. Then, the data information is communicated and sent to a big data platform of the remote monitoring service by using an encrypted communication protocol such as HTTPS, to perform data storage and analysis on the data information. Exemplarily, "log" may be log information of the user equipment executing a task, "performance" may be information such as computing power load, bandwidth load, or storage space of the user equipment, "alarm" may be a record of a risk operation of the user equipment in a running process, and "version" may be a version of an operating system running on the user equipment. It should be understood that, in actual applications, in addition to the foregoing examples, the data information collected by the collection apparatus may be other information, which is not specifically limited herein.

In a process of the remote monitoring service, the data information collected in the network of user and transmitted to the big data platform is a black box for the user, and the user cannot perceive which data is collected and transmitted to the big data platform of the remote monitoring service. As a result, the user cannot determine whether sensitive data or data related to information security is transmitted to the big data platform of the remote monitoring service. This affects information security.

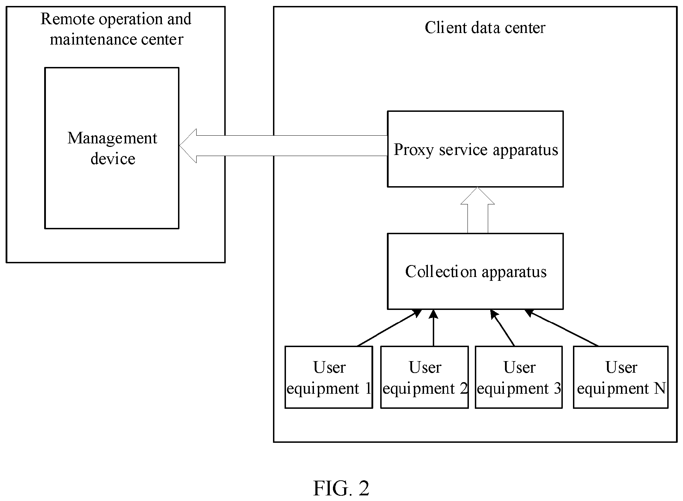

In view of this, the embodiments of this application provide a data processing method and a related apparatus, to improve an information security capability of user equipment. Referring to FIG. 2, FIG. 2 is a schematic diagram of an application scenario of a data processing method according to an embodiment of this application. As shown in FIG. 2, on the basis of the original remote monitoring service shown in FIG. 1, a proxy service apparatus is added. The proxy service apparatus forwards the collected data of the user equipment to a management device configured to execute the remote monitoring service. In this process, for the user equipment, there is no intrusion and incremental development, and execution efficiency is high.

In actual applications, the management device may be an independent physical server database, or may be a server cluster database that is composed of a plurality of physical servers, a distributed system database, or a primary database in a primary/secondary database system, or may be a cloud server database that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data or artificial intelligence platform. This is not specifically limited herein. The user equipment includes one or more physical devices. The physical device may be specifically a server, for example, a central server or an edge server, or may be a local server in a local data center, or the physical device may be a terminal device such as a desktop computer, a laptop computer, or a smartphone.

In a possible implementation, the proxy service apparatus (the same for the collection apparatus) may be deployed on a virtual machine of the user equipment, that is, the proxy service apparatus serves as a software module, and runs on the virtual machine of the user equipment. The user does not need to specially add a physical device to perform the data processing method provided in the embodiment of this application, thereby improving execution efficiency of the solution, and reducing implementation costs of the solution.

In a possible implementation, the proxy service apparatus (the same for the collection apparatus) may be deployed on a first device, and the first device is an independent physical device. The first device and the user equipment are located in a same network, which facilitates the user to manage the proxy service apparatus, to improve information security.

It should be noted that the proxy service apparatus and the collection apparatus may be deployed on a virtual machine of same user equipment, or may be deployed on virtual machines of different user equipment. Alternatively, the proxy service apparatus and the collection apparatus may be deployed on a same device, or may be deployed on different devices.

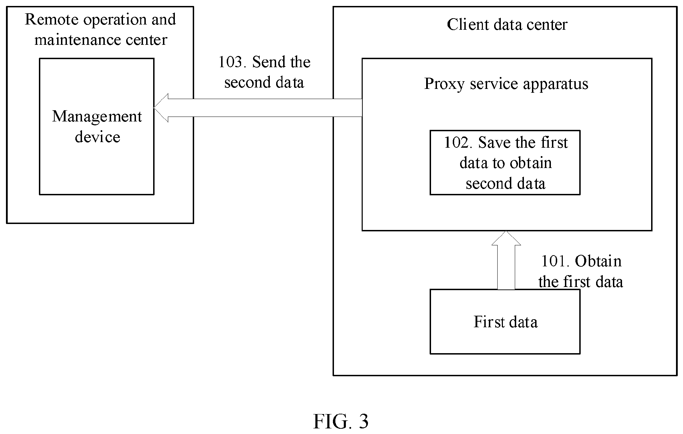

Referring to FIG. 3, FIG. 3 is a schematic flowchart of a data processing method according to an embodiment of this application. As shown in FIG. 3, the data processing method in the embodiment of this application includes:
101. A proxy service apparatus obtains first data of user equipment.

In a remote monitoring service, a management device is an execution device of the remote monitoring service of the user equipment, and the management device is responsible for analyzing and storing data from the user equipment. In the embodiment of this application, the first data of the user equipment is not directly sent to the management device. Instead, the first data is first sent to the proxy service apparatus. Specifically, after collecting the first data, a collection apparatus (not shown in FIG. 3) transmits the first data to the proxy service apparatus, that is, the proxy service apparatus obtains the first data. The first data includes but is not limited to hardware information of the user equipment, data of software running on the user equipment, or service data of the user equipment. For example, the first data may be information such as log information, device performance information, alarm information, or a software version.

102. The proxy service apparatus saves the first data locally to obtain second data, where the second data is configured for review by a user.

After obtaining the first data, the proxy service apparatus may copy the first data, and save the first data locally to obtain the second data, where the second data is configured for review by the user. Specifically, that the proxy service apparatus copies the first data and then saves the first data locally means that the first data is persisted and written into a disk of a device (for example, the user equipment or a first device located in a same network as the user equipment) on which the proxy service apparatus is deployed.

Because the first data is obtained by collecting various types of data of the user equipment, and is a data set including a plurality of types, the first data is usually stored at different storage addresses of the user equipment in a distributed manner. The second data is obtained by the proxy service apparatus by directly copying and saving the collected first data. Therefore, the second data is stored at a storage address of the device on which the proxy service apparatus is deployed. Therefore, byte contents of the second data and the first data are the same, but storage addresses of the second data and the first data are different. In this case, the user may review the second data (which is also equivalent to indirectly reviewing the first data based on the second data), to determine whether the second data can be forwarded.

In a possible implementation, after saving the first data locally to obtain the second data, the proxy service apparatus may process (for example, screen, filter, typeset, graph, or visualize) the second data to obtain third data. The third data includes at least one piece of data in the second data, for example, performance information of the user equipment, a log of the user equipment, alarm information of the user equipment, version information of an operating system running on the user equipment, a time of sending the second data, or a target object to which the second data is sent. Then, the proxy service apparatus displays a first interface. The first interface includes the third data. Because the third data is data obtained after the second data is organized and processed, it is convenient for lookup by the user, thereby improving efficiency of reviewing the second data by the user.

Exemplarily, it is assumed that the second data includes performance information of the user equipment, a record of a risk operation of the user equipment in a running process, version information of an operating system running on the user equipment, and the like. In actual applications, if data that the user is most concerned about is the record of the risk operation of the user equipment in the running process, data that the user is second-most concerned about is the performance information of the user equipment, and the version information of the operating system running on the user equipment is data that the user is not concerned about, the proxy service apparatus may shield "version information of an operating system running on the user equipment" in the second data, and prioritize "a record of a risk operation of the user equipment in a running process", to obtain the third data. The third data is displayed in the first interface. Therefore, readability of the second data is improved, and efficiency of reviewing the second data by the user is improved.

Further, if the proxy service apparatus is deployed on the user equipment or a virtual machine of the user equipment, the user equipment includes a display screen, the display screen is configured to display the foregoing first interface, and the first interface includes the third data. If the proxy service apparatus is deployed on a first device located in a same network as the user equipment, the first device includes a display screen, the display screen is configured to display the foregoing first interface, and the first interface includes the third data. Alternatively, the proxy service apparatus may further forward the third data to a third-party device, and display the first interface by using a display screen of the third-party device. This is not specifically limited herein.

In a possible implementation, the user may pre-define a content form of target data, for example, some data that is not expected to be transmitted to the management device, including but not limited to privacy data such as customer information in a bank system or security data related to a key of the bank system, and notifies the content form of the target data to the proxy service apparatus. After the proxy service apparatus saves the first data locally to obtain the second data, if the proxy service apparatus identifies that the second data includes the foregoing target data, the proxy service apparatus may send a prompt for the target data to the user, so that the user processes a current sending operation of the second data, thereby improving data security.

In a possible implementation, after the proxy service apparatus saves the first data locally to obtain the second data, the proxy service apparatus generates an operation log based on the second data, and records a current behavior (for example, a forwarding time or a forwarding destination address) of forwarding the second data to the management device, so that the user reviews the second data based on the operation log.

103. The proxy service apparatus sends the second data when the proxy service apparatus determines that the second data meets a first forwarding rule.

In the embodiment of this application, the proxy service apparatus needs to forward the second data based on an indication of the first forwarding rule. The first forwarding rule is configured by the user, and the user may modify, delete, or add the first forwarding rule, to manage a forwarding procedure of the second data. The proxy service apparatus may send the second data to the management device, and the management device analyzes and stores the first data, to provide a remote monitoring service for the user. Exemplarily, the proxy service apparatus may forward the first data by using open-source software Nginx that is widely used in the industry currently. The open-source software Nginx has a very strong capability of processing a static resource and has very high efficiency. Therefore, efficiency of forwarding the first data is improved. It should be understood that a manner in which the proxy service apparatus sends the first data or an encapsulation format of the first data is not limited in the embodiment of this application. In actual applications, the first data may also be sent in another manner.

In the embodiment of this application, the user may review the to-be-sent second data, and the proxy service apparatus needs to forward the second data based on an indication of the forwarding rule, thereby achieving dual control on the second data by the user and the proxy service apparatus, and improving an information security capability of the user equipment.

The user may set a forwarding rule on the proxy service apparatus, or may modify, delete, or add an existing forwarding rule. Specifically, the proxy service apparatus may send the second data when the proxy service apparatus determines that the second data meets the first forwarding rule. The forwarding rule includes but is not limited to a forwarding destination address, a forwarding time point, and enabling/disabling of a forwarding function of the proxy service apparatus. Whether the proxy service apparatus is allowed to forward the second data in the user equipment to the management device depends on enabling/disabling of the forwarding function, to implement manageability and controllability. It may be understood that the user can modify the forwarding rule. Exemplarily, the user may modify a time point that is in the forwarding rule and that is of forwarding the second data, for example, it is set in the forwarding rule that the second data is to be forwarded 9 o'clock every day. In this case, the proxy service apparatus forwards the second data only at 9 o'clock every day, and does not forward the second data at another time. For another example, the user may modify content information of the first data in the forwarding rule, and the user may set some sensitive data or privacy data as data not allowed to forward. In this case, the proxy service apparatus may filter out, based on the forwarding rule, content that is in the first data and that is not allowed to forward to the management device, and forward, to the management device, the first data obtained after filtering.

In a possible implementation, the first forwarding rule indicates that the proxy service apparatus is allowed to forward the second data after receiving an instruction of the user, and the instruction is used to indicate that the user agrees to forward the second data, thereby further improving an information security capability of the user equipment. That is, the proxy service apparatus sends the second data in response to an instruction of the user.

In a possible implementation, the first forwarding rule indicates that the proxy service apparatus may first forward the second data, and then provide the second data to the user for review, thereby improving forwarding efficiency of the second data.

Further, the user may further update the first forwarding rule to obtain a second forwarding rule, that is, the second forwarding rule is an updated first forwarding rule. After the user updates the forwarding rule, the proxy service apparatus needs to forward the second data based on an indication of the latest forwarding rule. Specifically, after obtaining the second forwarding rule (namely, the updated first forwarding rule), the proxy service apparatus sends the second data based on an indication of the second forwarding rule. In other words, the proxy service apparatus sends the second data when the proxy service apparatus determines that the second data meets the second forwarding rule (the updated first forwarding rule).

In actual applications, the proxy service apparatus may send the first data to the management device in real time and at a high frequency, that is, the proxy service apparatus sends the first data to the management device a plurality of times within a period, where the first data sent each time is reviewed by the user, and when review of the user on the first data succeeds, the first data may be sent to the management device. Alternatively, preset time may be selected within a period. When the preset time is reached, the user reviews all first data in the current period. When review of the user on the first data succeeds, the proxy service apparatus sends the first data in the current period to the management device together.

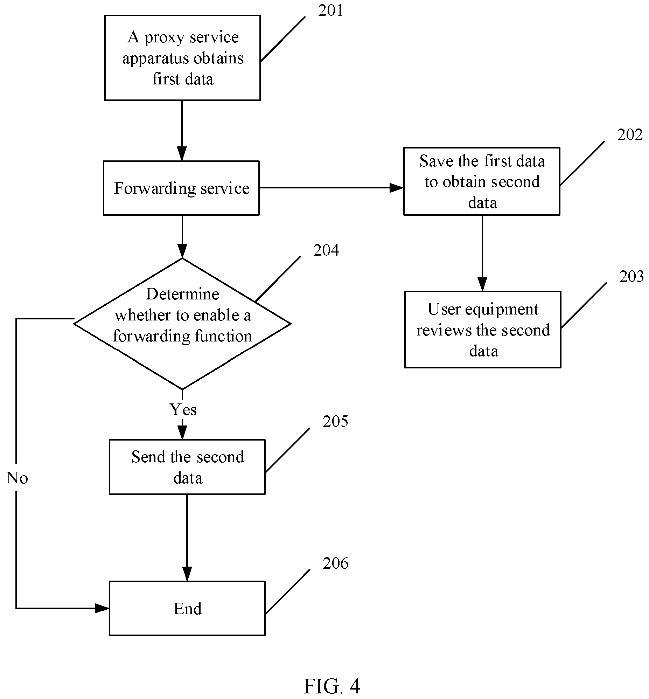

Referring to FIG. 4, FIG. 4 is a schematic diagram of a forwarding procedure based on enabling/disabling of a forwarding function according to an embodiment of this application. A user may modify a forwarding rule of a proxy service apparatus, so that the forwarding function can be enabled or disabled by modifying the forwarding rule. As shown in FIG. 4, the forwarding procedure based on enabling/disabling of the forwarding function includes:
201. The proxy service apparatus obtains first data.
202. The proxy service apparatus saves the first data to obtain second data.

For descriptions of step 201 and step 202, refer to the foregoing step 101 and the foregoing step 102 for details. Details are not described herein again.

203. The user reviews the second data.

In the embodiment of this application, a procedure of step 201 to step 203 is independent of the enabling or disabling of the forwarding function, and may be executed by default.

204. The proxy service apparatus determines, based on the forwarding rule, whether to enable the forwarding function. If the forwarding function is in an enabled state, step 205 is performed. If the forwarding function is in a disabled state, step 206 is performed.

205. The proxy service apparatus sends the second data to a management device.

206. The proxy service apparatus does not send the second data to a management device, and the procedure ends.

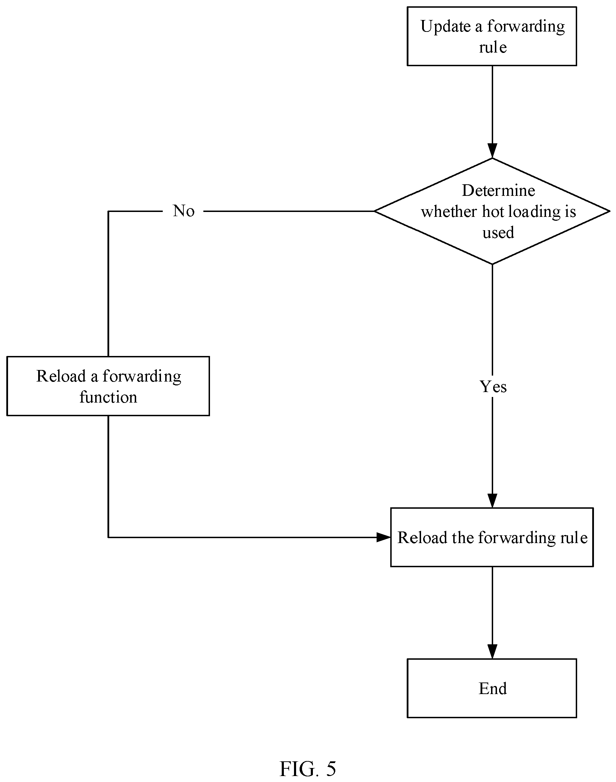

The user determines, based on modification of the forwarding rule, whether to enable or disable the forwarding function. After the forwarding rule changes, the forwarding function in the proxy service apparatus may be updated in a cold loading or hot loading manner. When the user makes a large modification on the forwarding rule (for example, adjusts enabling or disabling of the forwarding function), the entire forwarding function needs to be reloaded, and this is cold loading. When the user makes a small modification on the forwarding rule (for example, modifies an execution time of the forwarding function), the updated forwarding rule may be reloaded, and this is hot loading. Referring to FIG. 5, FIG. 5 is a schematic flowchart of updating a forwarding function of a proxy service apparatus according to an embodiment of this application. As shown in FIG. 5, after the forwarding rule is updated, if the hot loading mode is selected, the updated forwarding rule may be reloaded, and forwarding is performed based on the updated forwarding rule. If the hot loading mode is not selected, the forwarding function needs to be reloaded. After the forwarding function is reloaded, forwarding is performed based on the updated forwarding rule.

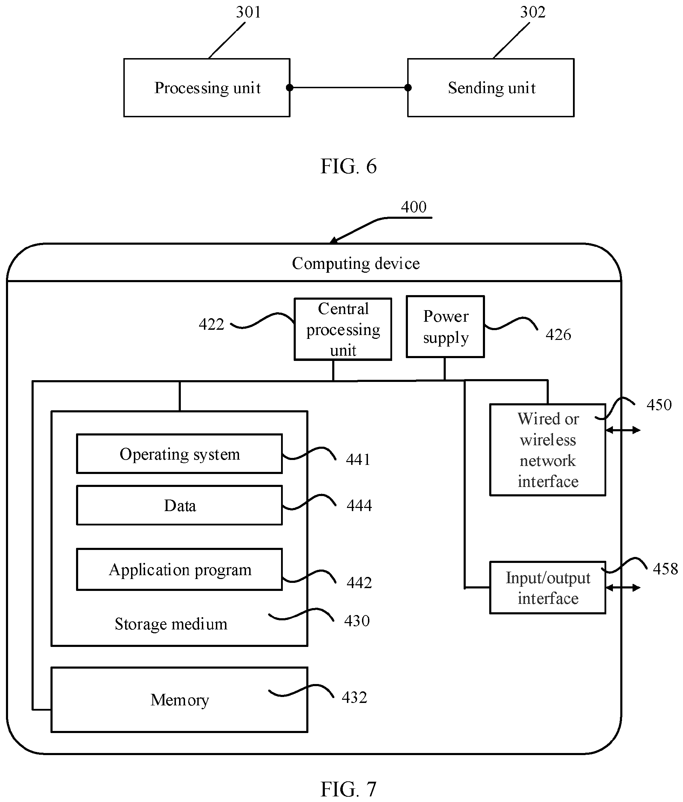

To better implement the foregoing solutions in the embodiments of this application, the embodiments of this application further provide a related device used to implement the foregoing solutions. Specifically, referring to FIG. 6, FIG. 6 is a schematic diagram of a structure of a proxy service apparatus according to an embodiment of this application. As shown in FIG. 6, the proxy service apparatus includes:
a processing unit 301, configured to obtain first data of user equipment,
the processing unit 301, further configured to save the first data locally to obtain second data, where the second data is configured for review by a user; and
a sending unit 302, configured to send the second data when it is determined that the second data meets a first forwarding rule.

In a possible design, the processing unit 301 is further configured to:
generate an operation log based on the second data, where the operation log is configured for the user to review the second data.

In a possible design, the first forwarding rule includes:
the sending unit sends the second data in response to an instruction of the user, where the instruction is configured to indicate that the user agrees to forward the second data.

In a possible design, the processing unit 301 is further configured to obtain a second forwarding rule, where the second forwarding rule is an updated first forwarding rule; and
the sending unit is further configured to send the second data when it is determined that the second data meets the second forwarding rule.

In a possible design, the processing unit 301 is further configured to:
obtain third data based on the second data, where the third data includes at least one piece of data in the second data; and
display a first interface, where the first interface includes the third data.

In a possible design, the proxy service apparatus is deployed on a virtual machine of the user equipment.

In a possible design, the proxy service apparatus is deployed on a first device, and the first device and the user equipment are located in a same network.

It should be noted that content such as information interaction and execution processes between modules/units in the proxy service apparatus is based on a same concept as the method embodiment corresponding to FIG. 3 in the embodiments of this application. For specific content, refer to the foregoing descriptions in the method embodiment shown in this application. Details are not described herein again.

An embodiment of this application further provides a computing device. Referring to FIG. 7, FIG. 7 is a schematic diagram of a structure of a computing device according to an embodiment of this application. The computing device 400 may be deployed with the proxy service apparatus described in the embodiment corresponding to FIG. 6, and is configured to implement a function in the embodiment corresponding to FIG. 3. Specifically, the computing device 400 is implemented by one or more servers. The computing device 400 may vary greatly due to different configurations or performance, and may include one or more central processing units (central processing units, CPU) 422 (for example, one or more processors) and memories 432, and one or more storage media 430 (for example, one or more mass storage devices) that store an application program 442 or data 444. The memory 432 and the storage medium 430 may be transient storage or persistent storage. The program stored in the storage medium 430 may include one or more modules (not shown in the figure), and each module may include a series of instruction operations for the computing device. Further, the central processing unit 422 may be configured to communicate with the storage medium 430, and execute a series of instruction operations in the storage medium 430 on the computing device 400.

The computing device 400 may further include one or more power supplies 426, one or more wired or wireless network interfaces 450, one or more input/output interfaces 458, and/or one or more operating systems 441, such as Windows Server^{™}, Mac OS X^{™}, Unix^{™}, Linux^{™}, and FreeBSD^{™}.

It should be noted that content such as information interaction and execution processes between modules/units in the computing device is based on a same concept as the method embodiment corresponding to FIG. 3 in this application. For specific content, refer to the foregoing descriptions in the method embodiment shown in this application. Details are not described herein again.

An embodiment of this application further provides a computer program product that includes instructions. The computer program product may be a software or a program product that includes instructions and that can be run on a computing device or stored in any available medium. When the computer program product is run on at least one computer device, the at least one computer device is enabled to perform the method described in the foregoing embodiment shown in FIG. 3.

An embodiment of this application further provides a computer-readable storage medium. The computer-readable storage medium may be any available medium of a computing device capable of storing, or be a data storage device, such as a data center, that includes one or more available media. The available medium may be a magnetic medium (for example, a floppy disk, a hard disk, or a magnetic tape), an optical medium (for example, a digital versatile disc (DVD)), a semiconductor medium (for example, a solid state disk), or the like. The computer-readable storage medium includes instructions, and the instructions instruct the computing device to perform the method described in the foregoing embodiment shown in FIG. 3.

A neural network training apparatus provided in the embodiment of this application may specifically be a chip, and the chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the method described in the foregoing embodiment shown in FIG. 3. Optionally, the storage unit is a storage unit in the chip, for example, a register or a cache. Alternatively, the storage unit may be a storage unit in a wireless access device and outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate parts may or may not be physically separate, and parts displayed as units may or may not be physical units, that is, may be located in one location, or may be distributed on a plurality of network units. Some or all of the modules may be selected based on an actual requirement to implement the objectives of the solutions in the embodiments. In addition, in the accompanying drawings of the apparatus embodiment provided in this application, a connection relationship between modules indicates that there is a communication connection between the modules, which may be specifically implemented as one or more communication buses or signal lines.

Based on the descriptions of the foregoing implementations, a person skilled in the art may clearly understand that the embodiments of this application may be implemented by using software plus necessary universal hardware, or certainly may be implemented by using dedicated hardware, including a dedicated integrated circuit, a dedicated CPU, a dedicated memory, a dedicated component, and the like. Generally, any function completed by a computer program may be easily implemented by using corresponding hardware. In addition, diverse specific hardware structures may also be used to implement a same function, for example, an analog circuit, a digital circuit, or a dedicated circuit. However, for the embodiments of this application, software program implementation is a better implementation in most cases. Based on such an understanding, the technical solutions of the embodiments of this application essentially or the part contributing to the conventional technology may be embodied in a form of a software product. The computer software product is stored in a readable storage medium, such as a floppy disk, a universal serial bus (USB) flash drive, a portable hard disk, a ROM, a RAM, a magnetic disk, or an optical disc of a computer, and includes several instructions for instructing a computer device (which may be a personal computer, a training device, a network device, or the like) to perform the methods in the embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions described in the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any available medium of a computer capable of storing, or a data storage device, such as a training device or a data center, including integrated one or more available media. The available medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, comprising:
obtaining, by a proxy service apparatus (300), first data of user equipment (400);
saving, by the proxy service apparatus (300), the first data locally to obtain second data, wherein the second data is configured for review by a user, and the saving the first data locally comprises that the first data is persisted and written into a disk of a device on which the proxy service apparatus is deployed; and
sending, by the proxy service apparatus (300), the second data when the proxy service apparatus (300) determines that the second data meets a first forwarding rule, wherein the first forwarding rule comprises the proxy service apparatus (300) sends the second data in response to an instruction of the user, and the instruction is configured to indicate that the user agrees to forward the second data.

2. The method according to claim 1, wherein after the saving, by the proxy service apparatus (300), the first data locally to obtain second data, the method further comprises:
generating, by the proxy service apparatus (300), an operation log based on the second data, wherein the operation log is configured for the user to review the second data.

3. The method according to any one of claims 1 to 2, wherein prior to the sending, by the proxy service apparatus (300), the second data, the method further comprises:
obtaining, by the proxy service apparatus (300), a second forwarding rule, wherein the second forwarding rule is an updated first forwarding rule; and
sending, by the proxy service apparatus (300), the second data when the proxy service apparatus determines that the second data meets the second forwarding rule.

4. The method according to any one of claims 1 to 3, wherein the method further comprises:
obtaining, by the proxy service apparatus (300), third data based on the second data, wherein the third data comprises at least one of performance information of the user equipment (400), a log of the user equipment (400), alarm information of the user equipment (400), version information of an operating system running on the user equipment (400), a time of sending the second data, or a target object to which the second data is sent; and
displaying, by the proxy service apparatus (300), a first interface, wherein the first interface comprises the third data.

5. The method according to any one of claims 1 to 4, wherein the proxy service apparatus (300) is deployed on a virtual machine of the user equipment (400).

6. The method according to any one of claims 1 to 4, wherein the proxy service apparatus (300) is deployed on a first device (500), and the first device (500) and the user equipment (400) are located in a same network.

7. A proxy service apparatus (300), comprising:
a processing unit (301), configured to obtain first data of user equipment (400),
wherein the processing unit (301) is further configured to save the first data locally to obtain second data, wherein the second data is configured for review by a user, wherein the saving the first data locally comprises that the first data is persisted and written into a disk of a device on which the proxy service apparatus is deployed; and
a sending unit (302), configured to send the second data when it is determined that the second data meets a first forwarding rule, wherein the first forwarding rule comprises the sending unit (302) sends the second data in response to an instruction of the user, and the instruction is configured to indicate that the user agrees to forward the second data.

8. The proxy service apparatus (300) according to claim 7, wherein the processing unit (301) is further configured to:
generate an operation log based on the second data, wherein the operation log is configured for the user to review the second data.

9. The proxy service apparatus (300) according to claim 7 or 8, wherein
the processing unit (301) is further configured to obtain a second forwarding rule, wherein the second forwarding rule is an updated first forwarding rule; and
the sending unit (302) is further configured to send the second data when it is determined that the second data meets the second forwarding rule.

10. The proxy service apparatus (300) according to any one of claims 7 to 9, wherein the processing unit (301) is further configured to:
obtain third data based on the second data, wherein the third data comprises at least one piece of data in the second data; and
display a first interface, wherein the first interface comprises the third data.

11. The proxy service apparatus (300) according to any one of claims 7 to 10, wherein the proxy service apparatus (300) is deployed on a virtual machine of the user equipment (400).

12. The proxy service apparatus (300) according to any one of claims 7 to 10, wherein the proxy service apparatus (300) is deployed on a first device (500), and the first device (500) and the user equipment (400) are located in a same network.

## Patentansprüche

1. Datenverarbeitungsverfahren, umfassend:
Erhalten erster Daten eines Benutzergeräts (400) durch eine Proxy-Dienst-Einrichtung (300);
lokales Speichern der ersten Daten durch die Proxy-Dienst-Einrichtung (300), um zweite Daten zu erhalten, wobei die zweiten Daten zur Überprüfung durch einen Benutzer konfiguriert sind, und das lokale Speichern der ersten Daten umfasst, dass die ersten Daten persistent gemacht und auf eine Festplatte einer Vorrichtung geschrieben werden, auf der die Proxy-Dienst-Einrichtung bereitgestellt ist; und
Senden der zweiten Daten durch die Proxy-Dienst-Einrichtung (300), wenn die Proxy-Dienst-Einrichtung (300) bestimmt, dass die zweiten Daten eine erste Weiterleitungsregel erfüllen, wobei die erste Weiterleitungsregel umfasst, dass die Proxy-Dienst-Einrichtung (300) die zweiten Daten als Reaktion auf eine Anweisung des Benutzers sendet, und die Anweisung konfiguriert ist, um anzuzeigen, dass der Benutzer damit einverstanden ist, die zweiten Daten weiterzuleiten.

2. Verfahren nach Anspruch 1, wobei das Verfahren nach dem lokalen Speichern der ersten Daten durch die Proxy-Dienst-Einrichtung (300), um zweite Daten zu erhalten, ferner Folgendes umfasst:
Erstellen eines Betriebsprotokolls durch die Proxy-Dienst-Einrichtung (300) basierend auf den zweiten Daten, wobei das Betriebsprotokoll zur Überprüfung der zweiten Daten durch den Benutzer konfiguriert ist.

3. Verfahren nach einem der Ansprüche 1 bis 2, wobei das Verfahren vor dem Senden der zweiten Daten durch die Proxy-Dienst-Einrichtung (300) ferner Folgendes umfasst:
Erhalten einer zweiten Weiterleitungsregel durch die Proxy-Dienst-Einrichtung (300), wobei die zweite Weiterleitungsregel eine aktualisierte erste Weiterleitungsregel ist; und
Senden der zweiten Daten durch die Proxy-Dienst-Einrichtung (300), wenn die Proxy-Dienst-Einrichtung bestimmt, dass die zweiten Daten die zweite Weiterleitungsregel erfüllen.

4. Verfahren nach einem der Ansprüche 1 bis 3, wobei das Verfahren ferner Folgendes umfasst:
Erhalten dritter Daten durch die Proxy-Dienst-Einrichtung (300) basierend auf den zweiten Daten, wobei die dritten Daten mindestens eines von Leistungsinformationen des Benutzergeräts (400), einem Protokoll des Benutzergeräts (400), Alarminformationen des Benutzergeräts (400), Versionsinformationen eines Betriebssystems, das auf dem Benutzergerät (400) ausgeführt wird, einem Zeitpunkt des Sendens der zweiten Daten oder einem Zielobjekt umfassen, an das die zweiten Daten gesendet werden; und
Darstellen einer ersten Schnittstelle durch die Proxy-Dienst-Einrichtung (300), wobei die erste Schnittstelle die dritten Daten umfasst.

5. Verfahren nach einem der Ansprüche 1 bis 4, wobei die Proxy-Dienst-Einrichtung (300) auf einer virtuellen Maschine des Benutzergeräts (400) bereitgestellt ist.

6. Verfahren nach einem der Ansprüche 1 bis 4, wobei die Proxy-Dienst-Einrichtung (300) auf einer ersten Vorrichtung (500) bereitgestellt ist und die erste Vorrichtung (500) und das Benutzergerät (400) sich in einem gleichen Netzwerk befinden.

7. Proxy-Dienst-Einrichtung (300), umfassend:
eine Verarbeitungseinheit (301), die konfiguriert ist, um erste Daten eines Benutzergeräts (400) zu erhalten,
wobei die Verarbeitungseinheit (301) ferner konfiguriert ist, um die ersten Daten lokal zu speichern, um zweite Daten zu erhalten, wobei die zweiten Daten zur Überprüfung durch einen Benutzer konfiguriert sind, wobei das lokale Speichern der ersten Daten umfasst, dass die ersten Daten persistent gemacht und auf eine Festplatte einer Vorrichtung geschrieben werden, auf der die Proxy-Dienst-Einrichtung bereitgestellt ist; und
eine Sendeeinheit (302), die konfiguriert ist, um die zweiten Daten zu senden, wenn bestimmt wird, dass die zweiten Daten eine erste Weiterleitungsregel erfüllen, wobei die erste Weiterleitungsregel umfasst, dass die Sendeeinheit (302) die zweiten Daten als Reaktion auf eine Anweisung des Benutzers sendet, und die Anweisung konfiguriert ist, um anzuzeigen, dass der Benutzer damit einverstanden ist, die zweiten Daten weiterzuleiten.

8. Proxy-Dienst-Einrichtung (300) nach Anspruch 7, wobei die Verarbeitungseinheit (301) ferner zu Folgendem konfiguriert ist: Erstellen eines Betriebsprotokolls basierend auf den zweiten Daten, wobei das Betriebsprotokoll zur Überprüfung der zweiten Daten durch den Benutzer konfiguriert ist.

9. Proxy-Dienst-Einrichtung (300) nach Anspruch 7 oder 8, wobei die Verarbeitungseinheit (301) ferner konfiguriert ist, um eine zweite Weiterleitungsregel zu erhalten, wobei die zweite Weiterleitungsregel eine aktualisierte erste Weiterleitungsregel ist; und
die Sendeeinheit (302) ferner konfiguriert ist, um die zweiten Daten zu senden, wenn bestimmt wird, dass die zweiten Daten die zweite Weiterleitungsregel erfüllen.

10. Proxy-Dienst-Einrichtung (300) nach einem der Ansprüche 7 bis 9, wobei die Verarbeitungseinheit (301) ferner zu Folgendem konfiguriert ist:
Erhalten dritter Daten basierend auf den zweiten Daten, wobei die dritten Daten mindestens ein Datenelement in den zweiten Daten umfassen; und
Darstellen einer ersten Schnittstelle, wobei die erste Schnittstelle die dritten Daten umfasst.

11. Proxy-Dienst-Einrichtung (300) nach einem der Ansprüche 7 bis 10, wobei die Proxy-Dienst-Einrichtung (300) auf einer virtuellen Maschine des Benutzergeräts (400) bereitgestellt ist.

12. Proxy-Dienst-Einrichtung (300) nach einem der Ansprüche 7 bis 10, wobei die Proxy-Dienst-Einrichtung (300) auf einer ersten Vorrichtung (500) bereitgestellt ist und die erste Vorrichtung (500) und das Benutzergerät (400) sich in einem gleichen Netzwerk befinden.

## Revendications

1. Procédé de traitement de données, comprenant :
l'obtention, par un appareil de service proxy (300), de premières données d'un équipement utilisateur (400) ;
l'enregistrement, par l'appareil de service proxy (300), des premières données localement pour obtenir des deuxièmes données, dans lequel les deuxièmes données sont configurées pour être consultées par un utilisateur, et l'enregistrement des premières données localement comprend le fait que les premières données sont conservées et écrites sur un disque d'un dispositif sur lequel l'appareil de service proxy est déployé ; et
l'envoi, par l'appareil de service proxy (300), des deuxièmes données lorsque l'appareil de service proxy (300) détermine que les deuxièmes données satisfont à une première règle de transfert, dans lequel la première règle de transfert comprend le fait que l'appareil de service proxy (300) envoie les deuxièmes données en réponse à une instruction de l'utilisateur, et l'instruction est configurée pour indiquer que l'utilisateur accepte de transférer les deuxièmes données.

2. Procédé selon la revendication 1, dans lequel, après l'enregistrement, par l'appareil de service proxy (300), des premières données localement pour obtenir des deuxièmes données, le procédé comprend en outre :
la génération, par l'appareil de service proxy (300), d'un journal d'opérations sur la base des deuxièmes données, dans lequel le journal d'opérations est configuré pour que l'utilisateur puisse consulter les deuxièmes données.

3. Procédé selon l'une quelconque des revendications 1 et 2, dans lequel, avant l'envoi, par l'appareil de service proxy (300), des deuxièmes données, le procédé comprend en outre :
l'obtention, par l'appareil de service proxy (300), d'une seconde règle de transfert, dans lequel la seconde règle de transfert est une première règle de transfert mise à jour ; et
l'envoi, par l'appareil de service proxy (300), des deuxièmes données lorsque l'appareil de service proxy détermine que les deuxièmes données satisfont à la seconde règle de transfert.

4. Procédé selon l'une quelconque des revendications 1 à 3, dans lequel le procédé comprend en outre :
l'obtention, par l'appareil de service proxy (300), de troisièmes données sur la base des deuxièmes données, dans lequel les troisièmes données comprennent au moins un élément parmi des informations de performance de l'équipement utilisateur (400), un journal de l'équipement utilisateur (400), des informations d'alarme de l'équipement utilisateur (400), des informations de version d'un système d'exploitation exécuté sur l'équipement utilisateur (400), une heure d'envoi des deuxièmes données ou un objet cible auquel les deuxièmes données sont envoyées ; et
l'affichage, par l'appareil de service proxy (300), d'une première interface, dans lequel la première interface comprend les troisièmes données.

5. Procédé selon l'une quelconque des revendications 1 à 4, dans lequel l'appareil de service proxy (300) est déployé sur une machine virtuelle de l'équipement utilisateur (400).

6. Procédé selon l'une quelconque des revendications 1 à 4, dans lequel l'appareil de service proxy (300) est déployé sur un premier dispositif (500), et le premier dispositif (500) et l'équipement utilisateur (400) sont situés dans un même réseau.

7. Appareil de service proxy (300), comprenant :
une unité de traitement (301), configurée pour obtenir des premières données d'un équipement utilisateur (400),
dans lequel l'unité de traitement (301) est en outre configurée pour enregistrer les premières données localement pour obtenir des deuxièmes données, dans lequel les deuxièmes données sont configurées pour être consultées par un utilisateur, dans lequel l'enregistrement des premières données localement comprend le fait que les premières données sont conservées et écrites sur un disque d'un dispositif sur lequel l'appareil de service proxy est déployé ; et
une unité d'envoi (302), configurée pour envoyer les deuxièmes données lorsqu'il est déterminé que les deuxièmes données satisfont à une première règle de transfert, dans lequel la première règle de transfert comprend le fait que l'unité d'envoi (302) envoie les deuxièmes données en réponse à une instruction de l'utilisateur, et l'instruction est configurée pour indiquer que l'utilisateur accepte de transférer les deuxièmes données.

8. Appareil de service proxy (300) selon la revendication 7, dans lequel l'unité de traitement (301) est en outre configurée pour :
générer un journal d'opérations sur la base des deuxièmes données, dans lequel le journal d'opérations est configuré pour que l'utilisateur puisse consulter les deuxièmes données.

9. Appareil de service proxy (300) selon la revendication 7 ou 8, dans lequel
l'unité de traitement (301) est en outre configurée pour obtenir une seconde règle de transfert, dans lequel la seconde règle de transfert est une première règle de transfert mise à jour ; et l'unité d'envoi (302) est en outre configurée pour envoyer les deuxièmes données lorsqu'il est déterminé que les deuxièmes données satisfont à la seconde règle de transfert.

10. Appareil de service proxy (300) selon l'une quelconque des revendications 7 à 9, dans lequel l'unité de traitement (301) est en outre configurée pour :
obtenir des troisièmes données sur la base des deuxièmes données, dans lequel les troisièmes données comprennent au moins un élément de donnée dans les deuxièmes données ; et
afficher une première interface, dans lequel la première interface comprend les troisièmes données.

11. Appareil de service proxy (300) selon l'une quelconque des revendications 7 à 10, dans lequel l'appareil de service proxy (300) est déployé sur une machine virtuelle de l'équipement utilisateur (400).

12. Appareil de service proxy (300) selon l'une quelconque des revendications 7 à 10, dans lequel l'appareil de service proxy (300) est déployé sur un premier dispositif (500), et le premier dispositif (500) et l'équipement utilisateur (400) sont situés dans un même réseau.
